(19) Europäisches Patentamt
European Patent Office
Office européen des brevets

(11) **EP 4 461 766 A1**

(12) **EUROPEAN PATENT APPLICATION**
published in accordance with Art. 153(4) EPC

(43) Date of publication:
**13.11.2024 Bulletin 2024/46**

(21) Application number: 23770410.1

(22) Date of filing: **01.03.2023**

(51) International Patent Classification (IPC):
*C08J 3/22* (2006.01)     *C08K 5/54* (2006.01)
*C08K 5/548* (2006.01)    *C08L 1/02* (2006.01)
*C08L 21/00* (2006.01)    *C08L 23/00* (2006.01)

(52) Cooperative Patent Classification (CPC):
**C08J 3/22; C08K 5/54; C08K 5/548; C08L 1/02;**
**C08L 21/00; C08L 23/00**

(86) International application number:
**PCT/JP2023/007588**

(87) International publication number:
**WO 2023/176452 (21.09.2023 Gazette 2023/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.03.2022 JP 2022039674**

(71) Applicant: FURUKAWA ELECTRIC CO., LTD.
**Tokyo 100-8322 (JP)**

(72) Inventors:
• **HAMURO Yui**
  **Tokyo 100-8322 (JP)**
• **IKURA Yukihiro**
  **Tokyo 100-8322 (JP)**
• **NAKAJIMA Yasuo**
  **Tokyo 100-8322 (JP)**
• **SUYAMA Kenichi**
  **Tokyo 100-8322 (JP)**

(74) Representative: **Winter, Brandl - Partnerschaft**
**mbB**
**Alois-Steinecker-Straße 22**
**85354 Freising (DE)**

(54) **MASTERBATCH**

(57)     The purpose of the present invention is to provide: a masterbatch in which cellulose fibers are well dispersed in a rubber and the adhesion strength at the interface between the fibers and the rubber can be increased; and a simple method for producing the masterbatch.

The present invention provides a masterbatch containing a polyolefin resin, cellulose fibers, and a silane coupling agent. The mass ratio of the polyolefin resin to the cellulose fibers to the silane coupling agent is preferably in a range of 25-74 : 20-55 : 2-55. The silane coupling agent preferably has a polysulfide structure.

FIG. 1

EP 4 461 766 A1

**Description**

TECHNICAL FIELD

The present invention relates to a masterbatch including cellulose fibers, a method for producing the same, and a method for producing a rubber composition and a molded body to which the masterbatch is added.

BACKGROUND ART

Conventionally, as for reinforcing rubber materials, techniques of mixing short fibers in addition to techniques of filling carbon black, silica, and the like, have been known. Among them, reinforcing with cellulose fibers has the advantage of increasing strength without substantially impairing the flexibility and lightness of the rubber material, and improving abrasion resistance.

However, when hydrophilic cellulose fibers are simply added to hydrophobic rubber, problems such as poor dispersibility of the fibers in the rubber and aggregation of fibers tend to occur. Furthermore, it is known that because the adhesion strength at the interface between fibers and rubber is low, when force is applied to the rubber, the rubber and fibers tend to separate from each other at their interface, and as a result, sufficient strength cannot be obtained. Therefore, studies are being conducted on techniques using a masterbatch in which cellulose fibers are dispersed in a polymer, and techniques that improve adhesion strength at the interface between fibers and rubber.

For example, Patent Document 1 discloses a method in which an aqueous dispersion solution of cellulose fibers and rubber latex are mixed and dried to form a masterbatch, which is added to rubber. It has been reported that the rubber composition prepared by this method has good fiber dispersibility in the rubber and has improved breaking strength and rigidity. Furthermore, Patent Document 2 discloses a method of mixing and drying an aqueous dispersion solution of modified cellulose fibers and rubber latex to form a masterbatch. It has been reported that a rubber composition prepared by adding this masterbatch to rubber has excellent tensile properties.

Citation List

Patent Document

Patent Document 1: Japanese Patent No. 6878836
Patent Document 2: Japanese Unexamined Patent Application, Publication No. 2020-7457

DISCLOSURE OF THE INVENTION

Problems to be Solved by the Invention

As mentioned above, cellulose fibers are formed into a masterbatch and are modified usually by a wet process. According to the wet process, problems such as aggregation and poor dispersion of fibers can be reduced, but the adhesion strength at the interface between the fibers and the rubber is not always improved, and the strength and abrasion resistance of the rubber material may not be improved. In addition, the wet process needs treatment of waste liquid and is a water-based manufacturing method, so compatibility with existing processes has been a problem.

Thus, an object of the present invention is to provide a masterbatch that can improve dispersibility of cellulose fibers in rubber and further increase adhesion strength at an interface between the fibers and the rubber, a simple method for preparing the masterbatch, and furthermore a method for producing a rubber composition and a rubber molded body using the masterbatch.

Means for Solving the Problems

The present inventors have extensively studied in order to achieve the above-mentioned objects. As a result, the present inventors have found that when a masterbatch in which polyolefin resin is mixed with cellulose fibers and a silane coupling agent is prepared, and the masterbatch is added to rubber, dispersibility of cellulose fibers in the rubber can be improved, and further adhesion strength at the interface between the fibers and the rubber can be improved, and abrasion resistance or tensile/tear strength can be enhanced.

That is, the present invention provides the following.

[1] A masterbatch including a polyolefin resin, a cellulose fiber, and a silane coupling agent.

[2] The masterbatch according to [1], wherein a mass ratio of the polyolefin resin : the cellulose fiber : the silane coupling agent is in a range of 25 to 74% : 20 to 55% : 2 to 55%.

[3] The masterbatch according to [1] or [2], wherein the polyolefin resin is a polyethylene-based resin.

[4] The masterbatch according to [3], wherein the polyethylene-based resin includes a linear low-density polyethylene resin.

[5] The masterbatch according to any one of [1] to [4], wherein the cellulose fibers have an average fiber diameter in a range from 1 um to 50 $\mu$m, and an average fiber length in a range from 8 um to 3000 $\mu$m.

[6] The masterbatch according to any one of [1] to [5], wherein the silane coupling agent has a polysulfide structure.

[7] A method for producing a masterbatch, the method including kneading a polyolefin resin, a cellulose fiber, and a silane coupling agent.

[8] A rubber composition prepared using a masterbatch according to any one of [1] to [6].

In the description of the present invention, "to" used before and after numerical values is intended to include the numerical values written before and after "to" as a lower limit value and an upper limit value.

Effects of the Invention

According to the masterbatch of the present invention, a rubber composition, and a rubber molded body with good dispersibility of cellulose fibers can be obtained. In the masterbatch of the present invention, since the silane coupling agent acts as an interfacial adhesive agent between fibers and rubber, a rubber composition also having excellent adhesion strength between the interface between fibers and the rubber can be obtained. Therefore, the masterbatch of the present invention is excellent in improving physical properties, has good mechanical strength such as tensile strength and tear strength, and excellent abrasion resistance, as well as can provide a rubber molded product having flexibility and light weight. Since the masterbatch of the present invention includes an olefin resin as a base material, it does not need water-based treatment or waste treatment, and has the advantage that it can be produced using existing resin kneading facility.

BRIEF DESCRIPTION OF THE DRAWINGS

FIG. 1 is a schematic view showing a dispersion state of cellulose fibers in a masterbatch of the present invention;
FIG. 2 is a schematic view showing a dispersion state of cellulose fibers in a rubber in which the masterbatch of the present invention has been added; and
FIG. 3 is a polarized light micrograph of a sample obtained in Example 3.

PREFERRED MODE FOR CARRYING OUT THE INVENTION

Hereinafter, a masterbatch of the present invention will be described in detail based on embodiments, but the present invention is not limited to these embodiments.

<<Masterbatch>>

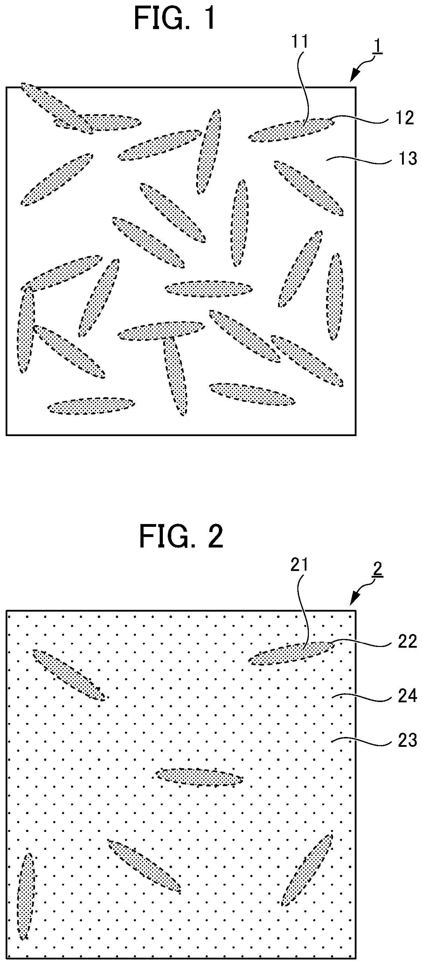

A masterbatch of the present invention includes a polyolefin resin (base material), cellulose fibers, and a silane coupling agent. The masterbatch of the present invention, when kneaded into various rubbers, can provide rubber compositions and rubber molded bodies in which cellulose fibers are well dispersed. FIG. 1 is a schematic view showing a dispersion state of cellulose fibers 11 in a masterbatch 1 of the present invention; FIG. 2 is a schematic view showing a dispersion state of cellulose fibers 21 in a rubber 2 in which the masterbatch of the present invention has been added. In the masterbatch 1 shown in FIG. 1, the cellulose fibers 11 with a silane coupling agent 12 applied on the surfaces thereof are dispersed in the base material 13. In the rubber 2 shown in FIG. 2 in which such a masterbatch is added, the cellulose fibers 21 with a silane coupling agent 22 applied on the surfaces thereof are uniformly dispersed together with a base material 23 of the masterbatch in the rubber component 24. Note here that in the embodiments shown in FIGs. 1 and 2, the silane coupling agent is shown only on the surface of the cellulose fiber, but the present invention is not limited to such embodiments. Hereinafter, each component constituting the masterbatch of the present invention is described.

<Base material>

The masterbatch of the present invention includes a polyolefin resin as a base material. In the present invention, the polyolefin resin includes all homopolymers and copolymers based on, for example, olefin monomers such as ethylene and propylene. Examples thereof include homopolymers such as polyethylene, polypropylene, polybutene, and polyisobutylene, copolymers such as an ethylene-α-olefin copolymer, an ethylene-cyclic olefin copolymer, an ethylene-vinyl acetate copolymer, ethylene-(meth)acrylic acid copolymer and metal salts thereof (ionomers), an ethylene-acrylic acid ester-maleic anhydride copolymer, and an ethylene-(meth)acrylic acid alkyl ester copolymer, and modified polyolefin such as maleic anhydride modified polyethylene, but the examples are not limited to these. Also, a plurality of types of polyolefin resins can be used in combination.

Since the masterbatch of the present invention is desirably melted at the kneading temperature of the rubber, the polyolefin resin is preferably a resin having a melting point of 140°C or less, more preferably a resin having a melting point of 100°C or more and less than 140°C, and further more preferably a resin having a melting point of 120°C or more and 135°C or less, and, for example, a polyethylene-based resin is particularly preferable.

<Polyethylene-based resin>

The polyethylene-based resin is not particularly limited, and, for example, all of ethylene homopolymers, ethylene-α-olefin copolymers, modified polyethylenes, and the like, can be used. Also, a plurality of types of polyethylene-based resins can be used.

However, the polyethylene-based resin is preferably one in which at least a part of the polyethylene component forms a crystal structure in the masterbatch at room temperature (25°C). When differential scanning calorimetry (DSC measurement) is performed on a molded body containing such a polyethylene-based resin, a melting peak associated with melting of polyethylene crystals is observed at $124 \pm 5$°C. For example, even when acid-modified polyethylene resin is used, a melting peak associated with melting of polyethylene crystals is observed at $124 \pm 5$°C. When a resin including polyethylene crystals exhibiting melting peak mentioned above, especially a polyethylene resin exhibiting a melting peak at a temperature of 140°C or less, particularly 120°C or more and 135°C or less, is used as a base material, an effect of improving dispersibility of cellulose fibers based on the masterbatch of the present invention can be made more remarkable.

Examples of the polyethylene-based resin include ethylene-α-olefin copolymers, and the like, in addition to ethylene homopolymers (polyethylene resins in the narrow sense). Note here that polyethylene resins copolymerized with a small amount, for example, about 20% or less of these α-olefins, are generally classified as polyethylene resins. Also in the present invention, the term "polyethylene resin" is used in a broad sense to include polyethylene-based resins containing some amounts of α-olefin units. Preferable examples of the α-olefin include 1-butene, 1-pentene, 1-hexene, 1-octene, 4-methylpentene-1, and the like. Furthermore, examples of the ethylene-α-olefin copolymer include ethylene-1-butene copolymer, ethylene-1-pentene copolymer, ethylene-1-hexene copolymer, and ethylene-1-octene copolymer.

<Polyethylene>

In the masterbatch of the present invention, the base material is preferably polyethylene. Note here that based on the degree of branching, density, properties, and the like, polyethylene is classified into high-density polyethylene (HDPE; density is approximately 0.942 g/cm$^3$ or higher), low-density polyethylene (LDPE; density is approximately 0.910 g/cm$^3$ or higher and less than 0.942 g/cm$^3$), and among them, those with a density of 0.930 g/cm$^3$ or more and less than 0.942 g/cm$^3$ may also be distinguished as "medium density polyethylene"), very low density polyethylene (VLDPE; approximately less than 0.910 g/cm$^3$), linear low-density polyethylene (LLDPE; density approximately 0.911 g/cm$^3$ or more and less than 0.940 g/cm$^3$), ultra-high molecular weight polyethylene (UHMW-PE), and the like. In the present invention, any of these polyethylene resins may be used.

In the present invention, more preferably, as the base material, low-density polyethylene is used, further preferably, a polyethylene-based resin including linear low-density polyethylene, and particularly preferably a linear low-density polyethylene is used. Since low-density polyethylene and linear low-density polyethylene have low crystallinity and are flexible, when used as the base material of the present invention, the masterbatch is easily kneaded into the rubber. In particular, the linear low-density polyethylene is excellent in flexible and tough, and has excellent heat-sealing property, and its melting point and softening temperature often fall within the range of about $124 \pm 5$°C. Therefore, while the masterbatch is easily melted when kneaded into rubber, there is no risk that the resin will flow and become liberated before being dispersed into the rubber, allowing cellulose fibers to be well dispersed into the rubber. Linear low-density polyethylene also has advantages in terms of cost as compared with other polyethylenes.

<Cellulose fiber>

Cellulose fibers used in the present invention are not particularly limited, but natural cellulose fibers derived from plants are preferable because they have an established industrial usage method and are easily available, and fine cellulose fibers derived from plants, for example, powdered pulps are preferable. Note here that the "cellulose fiber" includes regenerated cellulose fibers in a broad sense, and the masterbatch of the present invention can include regenerated cellulose, same as natural cellulose.

In general, cellulose fibers derived from plants are made up of 30 to 40 cellulose molecules bundled together to form ultra-thin and highly crystalline microfibrils with a diameter of about 3 nm and a length of several hundred nm to several tens of micrometers. These form a bundled structure via amorphous portions. The above-mentioned powdered pulp (powdered cellulose) is an aggregate of the bundles. In the present invention, the "cellulose fiber" is used to include not only the above-mentioned bundle of microfibrils (undefibrated state) but also the state of microfibrils produced by being defibrated.

Cellulose fibers derived from plants are not particularly limited, and examples thereof include wood, bamboo, hemp, jute, kenaf, agricultural residual waste (for example, straw from wheat and rice, stalks from corn and cotton, sugarcane), and those derived from cloth, recycled pulp, waste paper, wood flour, and the like. Preferably, cellulose fibers derived from wood, and particularly, wood pulp is used. As compared with pulps derived from other plants, wood pulp has the advantage of having a stable supply with less seasonal fluctuations in production. Note here that pulp is also a raw material for paper, and chemically, tracheid extracted from plants includes cellulose as its main component.

Cellulose fibers derived from plants often contain components other than cellulose, such as lignin and hemicellulose. In the present invention, although it is not necessary to completely remove these components other than cellulose, it is preferable that such components are in small amounts. For example, when the amount of lignin or hemicellulose is large as in a composition containing wood flour itself, it becomes difficult to impart desired mechanical properties. In the present invention, the content of cellulose in the cellulose fiber raw material is preferably 70% by mass or more, more preferably 80% by mass or more, and furthermore preferably 90% by mass or more. Particularly preferable cellulose fiber raw materials of this type include, for example, kraft pulp.

Kraft pulp is a general term for pulp produced by removing lignin and hemicellulose from wood or other plant materials through chemical treatment such as caustic soda, and extracting nearly pure cellulose. A main component is cellulose molecule, and a small amount of hemicellulose and lignin are included.

For the cellulose fiber of the present invention, a part of hydroxyl groups in the cellulose molecules may be acetylated or carboxylated, and the hydrogen atom in the hydroxyl group may be substituted with metal ions such as sodium and potassium, ammonium ions, and the like.

The average fiber diameter and average fiber length of the cellulose fibers are not particularly limited, and can be appropriately selected depending on the application of use and the like. However, from the viewpoint of dispersibility and reinforcing properties of fibers in rubber, the average fiber diameter of cellulose fibers is preferably 1 um to 50 $\mu$m, particularly preferably more than 1 um to 30 um. For the same reason, the average fiber length of the dispersed fibers, such as cellulose fibers, is preferably from 8 um to 3000 $\mu$m, particularly preferably from 8 um to 1000 $\mu$m, and further preferably from 8 um to 300 um. For example, the above-mentioned powdered pulp generally has a fiber diameter of 1 um to 40 um and particularly 5 um to 30 um, and a fiber length of 10 um to 1000 um and particularly 10 um to 300 um. Note here that the above average fiber diameter and average fiber length can be measured using a fiber analyzer or measured by averaging fiber lengths that are sizes in the longitudinal direction and fiber diameters that are sizes in the short length of the dispersed fibers observed under an optical microscope or electron microscope. When the average fiber diameter and the average fiber length are determined by microscopic observation, the scope of observation is, for example, 960 $\mu$m $\times$ 1200 um.

The above-mentioned cellulose fiber is preferably in a range from 20 to 120 parts by mass, and particularly preferably in a range from 60 to 110 parts by mass with respect to 100 parts by mass of the base materials. When the content of the cellulose fibers is low, the proportion of the base material is increased, so when a masterbatch is added to the rubber, a large amount of polyolefin resin may be mixed in, and the rubber-like quality may be lost. In addition, when the content of cellulose fibers is high, poor molding or poor fiber dispersibility in the masterbatch during the masterbatch formation process may occur, and the formation of cellulose aggregates in the rubber molded body may be generated.

<Silane coupling agent>

The masterbatch of the present invention contains a silane coupling agent in addition to the above components. Although the present invention is not necessarily limited by a specific theory, it is thought that the reason why the present invention is effective is that the silane coupling agent improves the interfacial adhesion strength between the cellulose fiber and the rubber, and the bound rubber between the rubber material and the cellulose increases.

A silane coupling agent is an organosilicon compound including a functional group that can react or interact with an organic substance and a hydrolyzable group such as an alkoxy group in one molecule. Examples of functional groups that can react or interact with organic substances include a sulfide group, a mercapto group, a vinyl group, an allyl group, a (meth)acryloyloxy group, a (meth)acryloyloxyalkylene group, an amine group, a ureido group, an isocyanate group, an epoxy group, and a p-styryl group. One type of silane coupling agent may be used, or two or more types may be used.

In the present invention, the silane coupling agent desirably includes a sulfur atom, and preferably includes a sulfide group or a mercapto group. A silane coupling agent having a polysulfide structure, such as a sulfide-based silane coupling agent having a polysulfide structure having 2 to 10 sulfur atoms is particularly preferable. When a sulfide-based silane coupling agent having such a polysulfide structure is blended, the Si part of the coupling agent bonds with the OH group of the cellulose fiber, and the sulfur part can crosslink with the rubber component, so the adhesion between the cellulose fiber and rubber can be improved and the strength can be increased.

The above-mentioned silane coupling agent is included preferably in a range from 0.05 to 70% by mass, particularly preferably in a range from 1 to 60% by mass, more preferably in a range from 2 to 50% by mass, and particularly in a range from 6 to 20% by mass with respect to 100% by mass of cellulose fibers. The silane coupling agent is also preferably contained in an amount of 0.1 to 40% by mass, particularly 1 to 30% by mass, more preferably 2 to 25% by mass, particularly in a range from 5 to 20% by mass with respect to 100% by mass of the total of the base material and cellulose fibers. When the addition amount of the silane coupling agent is small, the blending effects such as improving the dispersibility of cellulose fibers and reinforcing the rubber will not be sufficient, and when the amount is excessive, the cost will increase. In the masterbatch of the present invention, the mass ratio of polyolefin resin : cellulose fiber : silane coupling agent is preferably in a range of 25 to 74 : 20 to 55 : 2 to 55, more preferably in a range of 25 to 68 : 30 to 55 : 2 to 20, and particularly preferably in a range of 34 to 63 : 35 to 55 : 2 to 11.

<Other components>

In addition to polyolefin resins, cellulose fibers, and silane coupling agents, the masterbatch of the present invention may include resins other than polyolefin resin, fibers other than cellulose, and/or various conventional additives, and the like, to the extent that the effects of the present invention are not impaired.

Examples of resins other than polyolefin resins include, but are not limited to, general-purpose thermoplastic resins such as polystyrene resins and petroleum resins, and biodegradable resins such as polylactic acid. Examples of fibers other than cellulose include, but are not limited to, natural fibers such as silk and wool, organic fibers such as polyester fibers, polyamide fibers, polyethylene fibers, polypropylene fibers, phenol fibers, polyphenylene sulfide fibers, and carbon fibers, and furthermore, inorganic fibers such as glass fibers and rock wool.

Examples of additives include antioxidants, light stabilizers, radical scavengers, ultraviolet absorbers, colorants (dyes, organic pigments, inorganic pigments); fillers such as carbon black, silica, mica, talc, calcium carbonate, and barium sulfate; lubricants, plasticizers, processing aids such as acrylic processing aids, foaming agents, lubricants such as paraffin wax, surface treatment agents, crystal nucleating agents, mold release agents, hydrolysis inhibitors, anti-blocking agents, electrostatic charges, antifogging agents, anti-mold agents, ion trapping agents, flame retardants, flame retardant aids, but not limited thereto. Such other components can be contained appropriately within a range that does not impair the purpose of the present invention, such as, in an amount of about 0.1 to 10% by mass with respect to 100% by mass of the entire masterbatch.

<<Method for producing masterbatch>>

Next, examples of the masterbatch of the present invention will be described below.

The masterbatch of the present invention can be produced by kneading, typically melt-mixing a polyolefin resin, cellulose fibers, and a silane coupling agent. In the present invention, the melt mixing refers to kneading and dispersing components such as cellulose fibers and a silane coupling agent in a state where the polyolefin resin is melted, and for example, an extruder, a kneader, a Banbury mixer, and the like can be used. Among these, it is preferable to use a twin-screw extruder from the viewpoint of kneading power.

The order of kneading the polyolefin resin, cellulose fiber, and silane coupling agent is not particularly limited, and the silane coupling agent may be kneaded after the polyolefin resin and cellulose fiber are kneaded. The silane coupling agent can also be added to the surface of cellulose fibers and then kneaded with the base material. However, from the viewpoint of workability, it is preferable to knead the polyolefin resin material, cellulose fiber, and silane coupling agent all at once.

Cellulose fibers can also be melt-mixed in the presence of a dispersion aid. In this case, a dispersion aid for the dispersed fibers can be added into the mixing device (for example, an extruder) and recovered via a vent. As the dispersion aid for the dispersed fibers, water or the like is preferably used from the viewpoint that environmental burden such as separation or recovery is small and even if it remains, adverse effect on the dispersed fibers is small.

The masterbatch of the present invention thus produced may be processed into various shapes for the purpose of facilitating kneading into rubber. For example, the masterbatch kneaded as mentioned above can be extruded into strands using a single-screw extruder, and then cut into pellets using a pelletizer, or can also be processed into a sheet shape or film shape by rolling with a hot roll to form sheets for roll kneading.

<<Method for producing rubber composition and rubber molded product>>

The present invention also includes a rubber composition prepared using the above-mentioned masterbatch, for example, a rubber composition to which the above-mentioned masterbatch is added, and molded products thereof. The present invention further includes a method for producing a rubber composition and a rubber molded body, which includes kneading the above-mentioned masterbatch into rubber. The rubber composition is produced by a well-known method, for example, by kneading the raw rubber component, the above-mentioned masterbatch, and other components in a Banbury mixer, a kneader, an open roll, an extruder, or the like, and then vulcanizing thereof. Other blending agents include reinforcing agents (carbon black, silica, and the like), fillers (calcium carbonate, barium sulfate, talc, clay, and the like), a silane coupling agent, a vulcanization accelerator, stearic acid, zinc oxide, a vulcanizing agent, a vulcanization aid, a softening agent, a plasticizer, a processing auxiliary, an aging inhibitor, an ozone deterioration inhibitor, and the like.

<Rubber component>

Rubber into which the masterbatch of the present invention is kneaded is not particularly limited. In this specification, the polymer of the raw rubber may be referred to as a "rubber component" or a "rubber material" in order to distinguish it from a rubber composition after kneading a masterbatch and a rubber molded product after (crosslinking) molding. Rubber components are roughly classified into natural rubber and synthetic rubber. Examples of the natural rubber include natural rubber (NR) in a narrow sense without chemical modification; chemically modified natural rubber such as chlorinated natural rubber, chlorosulfonated natural rubber, and epoxidized natural rubber; hydrogenated natural rubber; and deproteinized natural rubber. Examples of the synthetic rubber include diene-based rubbers such as butadiene rubber (BR), styrene-butadiene copolymer rubber (SBR), isoprene rubber (IR), acrylonitrile-butadiene rubber (NBR), chloroprene rubber, styrene-isoprene copolymer rubber, styrene-isoprene-butadiene copolymer rubber, and isoprene-butadiene copolymer rubber; and non-diene-based rubbers such as butyl rubber (IIR), ethylene-propylene rubber (EPM, EPDM), acrylic rubber (ACM), epichlorohydrin rubber (CO, ECO), fluororubber (FKM), silicone rubber (Q), urethane rubber (U), and chlorosulfonated polyethylene (CSM). Among these, diene-based rubber is preferred, and diene-based natural rubber is more preferred. The rubber components may be used alone or in combination of two or more.

<Addition amount of masterbatch>

In the present invention, the amount of masterbatch added to the rubber composition is not particularly limited, and the amount may be a desired amount depending on the physical properties of the target rubber composition and molded body, the amount of cellulose fibers in the masterbatch, the type of rubber component, and the type and amount of the other components. For example, 0.3 to 20 parts by mass, particularly 2 to 15 parts by mass of masterbatch having a mass ratio of polyolefin resin : cellulose fiber : silane coupling agent of 25 to 74 : 20 to 55 : 2 to 55 with respect to 100 parts by mass of the rubber component may be kneaded. Furthermore, with respect to 100 parts by mass of rubber components to be kneaded, the addition amount of the cellulose fibers may be 0.1 to 7 parts by mass, and particularly 1 to 5 parts by mass.

<Rubber molded body>

In the present invention, the shape of the rubber molded body is not particularly limited, and the shape may be a sheet shape, a tubular shape, and other complicated shapes depending on the purpose and application of use. Also, the molding method is not limited, and various conventional molding methods such as press molding, injection molding, extrusion molding, and roll molding, and the like, can be used. A composite material with other members may be made by transfer molding or molding with a 3-axis or 4-axis calendar roll.

<Application of use>

Application of use of the rubber molded body of the present invention is not particularly limited. The rubber molded body of the present invention has advantages that excellent abrasion resistance and tear strength are exhibited, and a specific gravity is smaller than the rubber molded bodies containing other reinforcing fillers (silica or carbon black) because rubber molded body of the present invention is reinforced with cellulose fibers. Therefore, the rubber molded body of the present invention is useful in applications where lightness is required, and can be used in various applications such as members or materials that are lightweight and require high abrasion resistance and tear strength. For example, it can be suitably used as a material for automobile parts and footwear.

Specifically, the resin molded body of the present invention can be used as the following products, parts, and/or members. For example, transportation equipment (automobiles, motorcycles, trains, aircraft, and the like), structural members of robot arms, amusement robot parts, prosthetic limb members, home appliance materials, OA equipment housings, information processing equipment, mobile terminals, building materials, films for houses, drainage equipment, toiletry product materials, various tanks, containers, sheets, packaging materials, toys, stationery, food containers, bobbins, tubes, cable troughs, resin gutters, furniture materials (wall materials, handrails, and the like), shoes, and sporting goods. It can be used as a material for tires, belts, hoses, packing, shoe soles, and the like.

Examples of materials for transportation equipment include materials for vehicles. Examples of vehicle materials include trims such as dashboard trim, door trim, and pillar trim, interior parts such as meter panels, meter housings, glove boxes, package trays, roof headlinings, consoles, instrument panels, armrests, seats, seat backs, trunk lids, trunk lid lowers, door inner panels, pillars, spare tire covers, door knobs, light housings, and back trays, exterior parts such as bumpers, bonnets, spoilers, radiator grills, fenders, fender liners, rocker panels, side steps, door outer panels, side doors, back doors, roofs, roof carriers, wheel cap covers, door mirror covers, and under covers, and battery cases, engine covers, fuel tanks, fuel tubes, fuel filler boxes, air intake ducts, air cleaner housings, air conditioner housings, coolant reserve tanks, radiator reserve tanks, window washer tanks, intake manifolds, rotating parts such as fans and pulleys, parts such as wire harness protectors, connection boxes or connectors, and integrally molded parts such as front end modules, front end panels, and the like.

EXAMPLES

Hereinafter, the present invention will be explained in more detail based on Examples, but the present invention is not limited to these Examples except as specified above.

(Examples 1 to 4 and Comparative Examples 1 to 3)

Various masterbatches were prepared using the following materials. Furthermore, the masterbatches were kneaded into rubber and crosslinking (vulcanization) molded into a rubber sheet, and the obtained rubber molded bodies were evaluated for the physical properties. Table 1 below shows the masterbatch (MB) composition, rubber compositions for evaluation, and physical property evaluation results of each Example and Comparative Example.

-Materials used-

<Base material of masterbatch>

- Polyethylene resin: Urtozex® 3550R, linear low-density polyethylene resin manufactured by Prime Polymer Co., Ltd., a density of 932 kg/m$^3$

<Cellulose fiber>

- Cellulose fiber-1: Pulp sheet Harmac R (product name) manufactured by Harmac Pacific was shredded with a pulverizer, average fiber length 900 μm, average fiber diameter 25 um
- Cellulose fiber-2: KC Flock® W-200Y, manufactured by Nippon Paper Industries Co., Ltd., average fiber length 30 μm, average fiber diameter 15 um

<Silane coupling agent, and the like>

- Silane coupling agent: CABRUS®-4, bis(triethoxysilylpropyl) tetrasulfide manufactured by Osaka Soda Co., Ltd., sulfur average chain 3.7

- Comparative silane compound: KBE-04 (product name), tetraethoxysilane manufactured by Shin-Etsu Chemical Co., Ltd.

<Blending agent for preparing rubber sheet>

- Natural rubber: SVR CV60
- Silica: Nipsil® VN3, manufactured by Tosoh Silica Co., Ltd.
- Silane coupling agent: CABRUS®-4, manufactured by Osaka Soda Co., Ltd.
- Stearic acid: Tsubaki stearate (product name), manufactured by NOF Co., Ltd.
- Zinc oxide: two types of zinc oxide, manufactured by Mitsui Mining & Smelting Co., Ltd.
- Sulfur: Precipitated sulfur, manufactured by Tsurumi Chemical Industry Co., Ltd.
- Vulcanization accelerator: Noxeler® DM and Noxeler® TS, both manufactured by Ouchi Shinko Chemical Industry Co., Ltd.

(Example 1)

-Preparation of masterbatch-

Polyethylene resin, cellulose fibers-1, and a silane coupling agent were introduced from a hopper into a codirectional twin screw extruder (KZW15TW-45MG-NH, manufactured by Technovel Co., Ltd.) with a screw diameter of 15 mm and L/D of 45, and extruded and kneaded into strands. The above mixing was performed by adjusting the ratio of polyethylene resin : cellulose fiber-1 : silane coupling agent = 60:40:8 (mass ratio). After cooling and cutting, a pelletized masterbatch was obtained.

-Preparation of rubber sheet for physical property evaluation-

After heating and kneading natural rubber, the above masterbatch, silica, silane coupling agent, and vulcanization aid (zinc oxide, stearic acid) at 110 to 140°C in a 1 L kneader (DS1-5GHHE, manufactured by Moriyama Seisakusho Co., Ltd.), an unvulcanized rubber sheet (rubber composition) was prepared by kneading sulfur and a vulcanization accelerator at room temperature using an 8-inch roll (φ8-inch test roll, manufactured by Minamisenju Seisakusho Co., Ltd.). This was press-vulcanized at 150°C for 8 minutes to obtain a vulcanized rubber sheet with a thickness of 2 mm. The vulcanization time was determined to be the time at which the torque reaches its maximum in the curelastometer.

-Evaluation of cellulose dispersibility-

Each unvulcanized rubber sheet was pressed to a thickness of 0.1 mm at 150°C, was observed using a polarizing microscope (ECLIPSE LV100ND manufactured by Nikon Corporation) at 50x magnification and in arbitrary 10 scope, and was evaluated as "X" for poor dispersibility when 5 or more cellulose aggregates with an area of 20,000 $\mu m^2$ or more were observed, as "$\Delta$" for slightly poor dispersibility when 1 or more and less than 5 cellulose aggregates with an area of 20,000 $\mu m^2$ or more were observed, or as "O" for excellent dispersibility when no cellulose aggregates with an area of 20,000 $\mu m^2$ or more were observed.

-Evaluation of physical properties-

- Abrasion resistance evaluation

Abrasion resistance evaluation was performed according to ISO 20871. Using a DIN abrasion tester, a DIN abrasion volume was determined from the following formula at a load of 10 N and an abrasion distance of 40 m.

$$V = (m \times S_0) / (\rho \times S)$$

V: abrasion volume ($mm^3$), m: average abrasion value of sample (mg), $S_0$: normal abrasion value of standard rubber (200 mg), S: average abrasion value of standard rubber (mg), $\rho$: density (mg/$mm^3$)

- Hardness evaluation

Hardness evaluation was performed using a manual hardness meter (HARDMATIC HH-336 manufactured by Mitutoyo Co., Ltd.) according to JIS K6253.

- Evaluation of tear properties

Punching was carried out with an angle type (without cutting) according to JIS K6252, and breaking strength was measured with a chuck distance of 20 mm and at a tensile speed of 500 mm/min to obtain tear strength using a universal testing machine (Autograph AGS-X manufactured by Shimadzu Corporation).

- Tensile property evaluation

Punching into dumbbell-shaped 3 was carried out according to JIS K6251, breaking strength and elongation were measured with a chuck distance of 20 mm and at a tensile speed of 500 mm/min using a universal testing machine (Autograph AGS-X, manufactured by Shimadzu Corporation).

For all measured values, the value of Comparative Example 1, which did not contain cellulose fiber, was set to 100, and values of other Examples were expressed as indexes. As the value of DIN abrasion volume is smaller and the values of tear strength, the tensile strength (breaking strength), and elongation are larger, the reinforcement of the vulcanized rubber composition become better and the mechanical properties become excellent.

(Example 2)

Example 2 was carried out in the same manner as in Example 1, except that cellulose fiber-1 used in Example 1 was replaced with cellulose fiber-2, and the mixing ratio was set to polyethylene resin : cellulose fiber-2 : silane coupling agent was 60 : 40 : 2 (mass ratio).

(Example 3)

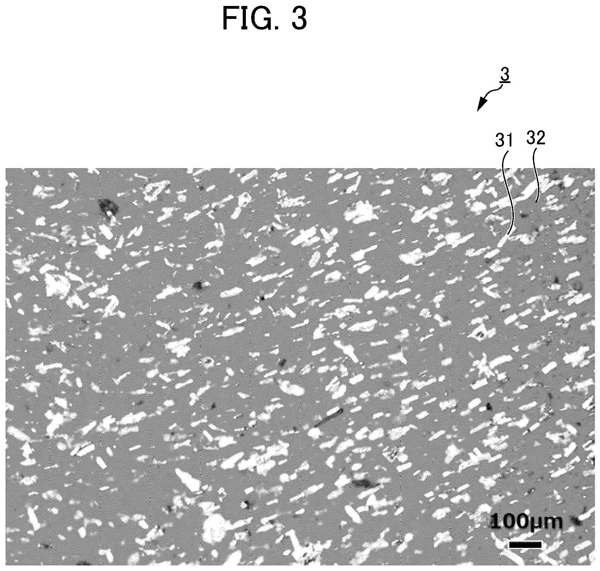

Example 3 was carried out in the same manner as in Example 2, except that polyethylene resin : cellulose fiber-2 : silane coupling agent was 60 : 40 : 8 (mass ratio). For reference, an example of the polarized light micrograph of the vulcanized rubber sheet sample obtained in this example is shown in FIG. 3. In the rubber sheet vulcanized product sample 3 of this Example, it is clear that the cellulose fibers (-2) 31 are well dispersed in the natural rubber 32.

(Example 4)

Example 4 was carried out in the same manner as in Example 2, except that polyethylene resin : cellulose fiber-2 : silane coupling agent was 60 : 40 : 20 (mass ratio).

(Comparative Example 1)

Comparative Example 1 was carried out in the same manner as in Example 1 except that a masterbatch was not added during preparation of the rubber sheet for evaluation.

(Comparative Example 2)

Comparative Example 2 was carried out in the same manner as in Example 1 except that a silane coupling agent was not added during preparation of a masterbatch.

(Comparative Example 3)

Comparative Example 3 was carried out in the same manner as in Example 1 except that the silane coupling agent used in Example 1 was replaced with a comparative silane compound.

[Table 1 Blending of each sample and evaluation results]

| | Material | Comparative Example 1 | Comparative Example 2 | Comparative Example 3 | Example 1 | Example 2 | Example 3 | Example 4 |
|---|---|---|---|---|---|---|---|---|
| MB composition | Polyethylene resin | - | 60 | 60 | 60 | 60 | 60 | 60 |
| | Cellulose fiber-1 | - | 40 | 40 | 40 | - | - | - |
| | Cellulose fiber-2 | - | - | - | - | 40 | 40 | 40 |
| | Silane coupling agent | - | - | - | 8 | 2 | 8 | 20 |
| | Silane compound for comparison | - | - | 8 | - | - | - | - |
| Rubber composition | Natural rubber | 100.00 | 100.00 | 100.00 | 100.00 | 100.00 | 100.00 | 100.00 |
| | Silica | 30.00 | 30.00 | 30.00 | 30.00 | 30.00 | 30.00 | 30.00 |
| | MB | - | 7.50 | 8.10 | 8.10 | 7.65 | 8.10 | 9.00 |
| | Silane coupling agent | 1.50 | 1.50 | 1.50 | 1.50 | 1.50 | 1.50 | 1.50 |
| | Stearic acid | 1.50 | 1.50 | 1.50 | 1.50 | 1.50 | 1.50 | 1.50 |
| | Zinc oxide | 3.00 | 3.00 | 3.00 | 3.00 | 3.00 | 3.00 | 3.00 |
| | Sulfur | 1.75 | 1.75 | 1.75 | 1.75 | 1.75 | 1.75 | 1.75 |
| | Vulcanization accelerator DM | 1.50 | 1.50 | 1.50 | 1.50 | 1.50 | 1.50 | 1.50 |
| | Vulcanization accelerator TS | 0.60 | 0.60 | 0.60 | 0.60 | 0.60 | 0.60 | 0.60 |
| Property evaluation results | Cellulose dispersibility | - | X | △ | O | O | O | O |
| | DIN abrasion volume * | 100 | 105 | 106 | 95 | 75 | 68 | 65 |
| | Hardness | 100 | 110 | 111 | 114 | 113 | 113 | 113 |
| | Tear strength | 100 | 62 | 58 | 98 | 105 | 115 | 73 |
| | Tensile strength | 100 | 84 | 85 | 96 | 108 | 113 | 108 |
| | Elongation at break | 100 | 89 | 92 | 87 | 97 | 95 | 92 |

* The lower the value is, the better the property is.

The results in Table 1 showed the following.

- All of the rubber sheets of Examples 1 to 4 have smaller DIN abrasion volumes than the rubber sheet of Comparative Example 1 without containing cellulose fibers. It has become clear that the abrasion resistance of the rubber molded body is improved by kneading the masterbatch of the present invention.
- In Comparative Example 2, all physical properties other than hardness were lower as compared with Comparative Example 1. On the contrary, in Example 1, the elongation at break is at the same level as in Comparative Example 2, and all other physical properties are improved, and abrasion resistance is improved and tear strength and tensile strength are in about the same level as compared with Comparative Example 1. This is thought that cellulose dispersibility was improved by the addition of the silane coupling agent and that adhesion strength on the interface between the fibers and rubber was improved.
- In Comparative Example 3 using a silane compound without having a sulfur atom or a reactive functional group was inferior to Comparative Example 1 in all physical properties other than hardness. Therefore, in Examples 1 to 3, it was suggested that the functional groups such as sulfide groups of the silane coupling agent crosslinked with the rubber, improving the adhesion strength at the fiber-rubber interface.
- Furthermore, as compared with Example 1, Examples 2 to 4 using cellulose fibers with a relatively small size, had particularly good abrasion resistance. Among them, in Example 4 using a masterbatch in which 20 parts by mass of silane coupling agent was added to cellulose fibers, each physical property was improved in a well-balanced manner.

EXPLANATION OF REFERENCE NUMERALS

1 Masterbatch
11 Cellulose fiber
12 Silane coupling agent
13 Base material
2 Rubber with masterbatch added
21 Cellulose fiber
22 Silane coupling agent
23 Base material
24 Rubber component
3 Rubber sheet vulcanized product sample
31 Cellulose fiber-2
32 Natural rubber

**Claims**

1. A masterbatch comprising: a polyolefin resin, a cellulose fiber, and a silane coupling agent.

2. The masterbatch according to claim 1, wherein a mass ratio of the polyolefin resin : the cellulose fiber : the silane coupling agent is in a range of 25 to 74 : 20 to 55 : 2 to 55.

3. The masterbatch according to claim 1 or 2, wherein the polyolefin resin is a polyethylene-based resin.

4. The masterbatch according to claim 3, wherein the polyethylene-based resin includes a linear low-density polyethylene resin.

5. The masterbatch according to any one of claims 1 to 4, wherein the cellulose fibers have an average fiber diameter in a range from 1 um to 50 $\mu$m, and an average fiber length in a range from 8 um to 3000 um.

6. The masterbatch according to any one of claims 1 to 5, wherein the silane coupling agent has a polysulfide structure.

7. A method for producing a masterbatch, the method comprising kneading a polyolefin resin, a cellulose fiber, and a silane coupling agent.

**8.** A rubber composition prepared using the masterbatch according to any one of claims 1 to 6.

# FIG. 1

# FIG. 2

# FIG. 3

## INTERNATIONAL SEARCH REPORT

| International application No. |
| --- |
| **PCT/JP2023/007588** |

### A. CLASSIFICATION OF SUBJECT MATTER

*C08J 3/22*(2006.01)i; *C08K 5/54*(2006.01)i; *C08K 5/548*(2006.01)i; *C08L 1/02*(2006.01)i; *C08L 21/00*(2006.01)i; *C08L 23/00*(2006.01)i

FI: C08J3/22 CES; C08L23/00; C08L21/00; C08L1/02; C08K5/54; C08K5/548

According to International Patent Classification (IPC) or to both national classification and IPC

### B. FIELDS SEARCHED

Minimum documentation searched (classification system followed by classification symbols)

C08J3/22; C08K3/00-13/08; C08L1/00-101-14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2021-14510 A (TOYAMA KANKYO SEIBI CO., LTD.) 12 February 2021 (2021-02-12) claim 1, paragraphs [0058], [0062], [0066]-[0100], [0110]-[0120], tables 1, 2 | 1-4, 7-8 |
| Y | | 1, 3, 5-8 |
| X | JP 2000-264975 A (UBE INDUSTRIES, LTD.) 26 September 2000 (2000-09-26) claim 1, paragraphs [0015], [0023], [0036], [0041], [0042], table 1 | 1, 3, 5, 7 |
| Y | | 6 |
| X | CN 112795072 A (LUOYANG LVZHIHUI PLASTIC DEGRADATION TECHNOLOGY CO., LTD.) 14 May 2021 (2021-05-14) claims 1, 3, 8, 10, examples 2, 5 | 1, 3-4, 7 |
| Y | | 6 |
| X | CN 110157097 A (WUHAN KINGBULL ECONOMIC DEVELOPMENT CO., LTD.) 23 August 2019 (2019-08-23) claims 1-2, 9, paragraphs [0024]-[0071] | 1, 7 |
| Y | | 6 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 May 2023** | **16 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 461 766 A1**

**INTERNATIONAL SEARCH REPORT**

| International application No. |
|---|
| **PCT/JP2023/007588** |

**C.    DOCUMENTS CONSIDERED TO BE RELEVANT**

| Category* | Citation of document, with indication, where appropriate, of the relevant passages | Relevant to claim No. |
|---|---|---|
| X | WO 2020/254713 A1 (UPM-KYMMENE CORP.) 24 December 2020 (2020-12-24)<br>claims 1, 10, p. 15, line 31 to p. 16, line 8 | 1, 3, 5, 7 |
| X | US 2010/0331458 A1 (CERNOHOUS, Jeffrey Jacob) 30 December 2010 (2010-12-30)<br>claims 1, 3, 4, 7, 9, 14, paragraphs [0010], [0011] | 1-3, 7 |
| Y | JP 2022-13396 A (NIPPON PAPER INDUSTRIES CO., LTD.) 18 January 2022 (2022-01-18)<br>paragraphs [0012], [0013], [0099]-[0107], [0129] | 1, 3, 5, 7-8 |
| Y | JP 2018-119072 A (NIPPON PAPER INDUSTRIES CO., LTD.) 02 August 2018<br>(2018-08-02)<br>claims 1, 7, paragraph [0066] | 6, 8 |
| A | | 1-5, 7 |
| X | JP 2000-239455 A (UBE INDUSTRIES, LTD.) 05 September 2000 (2000-09-05)<br>claim 1 | 8 |
| A | JP 2017-115023 A (SEIKO PMC CORP.) 29 June 2017 (2017-06-29)<br>entire text | 1-8 |
| A | JP 2004-204158 A (THE YOKOHAMA RUBBER CO., LTD.) 22 July 2004 (2004-07-22)<br>entire text | 1-8 |

Form PCT/ISA/210 (second sheet) (January 2015)

INTERNATIONAL SEARCH REPORT
Information on patent family members

International application No.

**PCT/JP2023/007588**

| Patent document cited in search report | | | Publication date (day/month/year) | Patent family member(s) | Publication date (day/month/year) |
|---|---|---|---|---|---|
| JP | 2021-14510 | A | 12 February 2021 | (Family: none) | |
| JP | 2000-264975 | A | 26 September 2000 | (Family: none) | |
| CN | 112795072 | A | 14 May 2021 | (Family: none) | |
| CN | 110157097 | A | 23 August 2019 | (Family: none) | |
| WO | 2020/254713 | A1 | 24 December 2020 | JP 2022-539691 A<br>claims 1, 10, paragraph [0045]<br>US 2022/0235186 A1<br>CN 114007827 A<br>KR 10-2022-0012944 A | |
| US | 2010/0331458 | A1 | 30 December 2010 | WO 2009/111272 A2<br>claims 1, 3, 4, 7, 9, 14,<br>paragraphs [0008]-[0009] | |
| JP | 2022-13396 | A | 18 January 2022 | (Family: none) | |
| JP | 2018-119072 | A | 02 August 2018 | (Family: none) | |
| JP | 2000-239455 | A | 05 September 2000 | (Family: none) | |
| JP | 2017-115023 | A | 29 June 2017 | (Family: none) | |
| JP | 2004-204158 | A | 22 July 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6878836 B
- JP 2020007457 A